# EUROPEAN PATENT SPECIFICATION

(11) **EP 3 001 510 B1**
(45) Date of publication and mention of the grant of the patent: **07.03.2018**
(21) Application number: 14306483.0
(22) Date of filing: 25.09.2014
(51) Int. Cl.: H01R 13/443, H01R 13/52, B25B 31/00, F16B 19/04, F16B 29/00, F16B 33/00

(54) **Plug**
Stopfen
Prise

(43) Date of publication of application: 30.03.2016
(73) Proprietor: Dubuis et Cie, 41000 Villebarrou (FR)
(72) Inventor: Cerfeuillet, Vincent, 41250 MASLIVES (FR)
(74) Representative: SBD IPAdmin

(56) References cited:
- EP-A1- 2 337 160
- GB-A- 2 503 561
- JP-A- H09 199 219
- US-A- 5 230 639
- US-A1- 2011 162 186

## Description

The present invention relates to a plug for temporarily sealing a hole and the surrounding area of a substrate. More particularly, the invention relates to a plug for maintaining the electrically conductive surface of the substrate while said substrate is being finished.

### Background

In many industries, electrical components and cables must be electrically and mechanically connected to large substrates. For instance, sensors must be connected to fuselages of aircraft, earthing cables must be connected to the rails of railroads, and so forth. Elaborate connecting devices are available for suitably connecting components and cables to such large substrates, and which typically comprise an electrically conductive body mechanically fastened to a hole within the substrate and defining a threaded bore to which the component or cable can be fastened. However, the integrity of electrical connections is reliant on the clean contact surface of the substrate, the connecting devices and the components themselves. Many substrates are finished with paint or alternative coatings which have poor electrical conductivity and thus affect the integrity of the electrical connection between the substrate and the connecting device, or the connecting device and the components depending on whether the paint is applied before or after the fitting of the connecting device. It is therefore necessary to ensure that the critical contact surfaces of the substrate and connecting device (if fitted before painting) are free from paint.

Some plugs have been proposed previously for this particular application, but they have proven to be ineffective at preserving the integrity of the electrically conductive surface. Plugs have also been proposed for other applications, but they too have lacked the characteristics required of a plug that must provide a good seal and must be suitable for temporary installation.

EP 2 337 160 discloses plugs for use in sealing unused chambers of an electrical contact housing assembly. However, those plugs do not facilitate easy insertion and removal.

US 5230639 discloses an eyelet for securing a first member to a second member through aligned apertures formed in those members.

The present invention seeks to solve the shortcomings associated with existing plugs.

### Summary of the Invention

According to a first aspect of the invention, there is provided a plug for temporary location in a hole formed in an electrically conductive body so as to conceal the hole and surrounding surfaces when applying a coating to said body, the plug comprising:
a shank having front and rear ends and made from an elastically deformable material;
a head provided on the rear end of the shank and defining an opening;
a bore extending axially from the opening in the head towards the front end of the shank, characterised in that the head comprises a sealing portion proximal to the shank and a gripping portion distal to the shank.

In a preferred arrangement, the sealing portion may comprise a flange extending radially from the shank. Advantageously, the flange may be circular, but may also be polygonal or even an irregular shape. The flange may define a forward facing contact area at least partway around the shank and which may occupy the whole area of the flange or perhaps an area of the flange distal from the shank. The purpose of the forward facing contacting area is to provide a suitable seal between the plug and the electrically conductive body in the vicinity of the hole.

Typically, the flange may have front and rear faces, which may be arranged generally opposite each other. The front face may be concaved and or the rear face may be convex. The concave and convex front and rear faces may be domed or conical. The concaved front face results in the portion of the flange distal from the shank being the most forward portion of the flange, which is a required characteristic of the forward facing contact area. Furthermore, the flange may include a peripheral face extending at least partway therearound and preferably the fullway therearound. In this manner, the peripheral face may interface the front and rear faces of the flange.

In one embodiment, the contact area comprises an annular edge defined between the front face and the peripheral face. A contact area of that nature may be rather narrow and may require the surface against which it bears to be smooth in order to create an effective seal.

In an alternative embodiment, the peripheral face is rounded and defines the forward facing contact area. This contact area may be preferable as the rounded face may deform slightly to create a wider contact area and thus a potentially better seal.

Turning now to the gripping portion, that may comprise an abutment surface, which is at least partially forward facing and engageable by a tool for urging the plug rearwardly. An advantageous feature of the invention is to enable the plug to be restrained as the shank is being urged forward; the abutment surface lends itself well to that purpose. The gripping portion may comprise a narrow first part adjacent the sealing portion and a wider second part distal from the sealing portion, the abutment surface being defined between the first and second parts. The abutment surface may comprise a step such that it is mostly forward facing or a taper such that it is less forward facing.

The forward facing abutment surface can be achieved in various ways. The abutment surface may comprise one facet or multiple facets spaced around the head. The abutment surface may be a continuous surface extending around the head. Most important is that the abutment surface can be suitably gripped to enable the plug to be restrained.

A tool may be used for installing a plug, such as that described above. Such a tool may comprise:
a body having front and rear ends and a chamber extending therealong;
a receiver provided on the front end of the body and configured to engage the gripping portion of the plug;
a plunger disposed in the chamber and moveable therealong; and
a needle provided on the plunger and extending through an aperture in the body.

Advantageously, a spring acts between the plunger and the body to urge the plunger and thus the needle rearwardly. This assists the operator in withdrawing the needle who need only release the plunger and allow it assume its normal position under the bias of the coil spring.

The tool may also include handles that are suitably positioned and shaped to facilitate use by the operator. The handles may be provided on the body and, depending on the size of the tool, may be configured to be gripped by two fingers. For instance, the handles may extend outwardly from opposed sides of the body.

The receiver should be shaped and sized to accommodate the gripping portion of the plug for which the tool is intended. The main purpose of the receiver is to hold the plug steady and to restrict axial movement of the plug, particularly in the forward direction.

According to a further aspect of the invention, there is provided a method of inserting the above described plug into a hole of a substrate or a connecting device, the method comprising the steps of:
selecting a plug having a shank with a diameter larger than that of the hole;
inserting a needle in to the bore of the plug;
elongating the shank by driving the needle forwards and urging the gripping portion rearwards;
locating the elongated shank of the plug in the hole and arranging the sealing portion against the substrate or the connecting device; and
withdrawing the needle from the hole so as to enable the shank to attempt to return to its pre-elongated shape.

### Specific Description

By way of example only, one embodiment of the present invention will now be described in detail with reference to the accompanying drawings, in which:
Figure 1 is a cross-sectional view of a fixing device suitable for connecting an electrical terminal to a substrate;
Figure 2 is a cross-sectional view corresponding to Figure 1, but showing the connecting device connecting an electrical terminal to the substrate;
Figure 3 is a perspective view of the plug according to the invention, which is configured for insertion into the fixing device of Figures 1 and 2.
Figure 4 is a cross-sectional view of the plug shown in Figure 3;
Figure 5 is a cross-sectional view of a modified plug
Figure 6 shows a perspective view of a tool for inserting the plug into the fixing device;
Figure 7 shows a cross-sectional view of the tool shown in figure 6; and

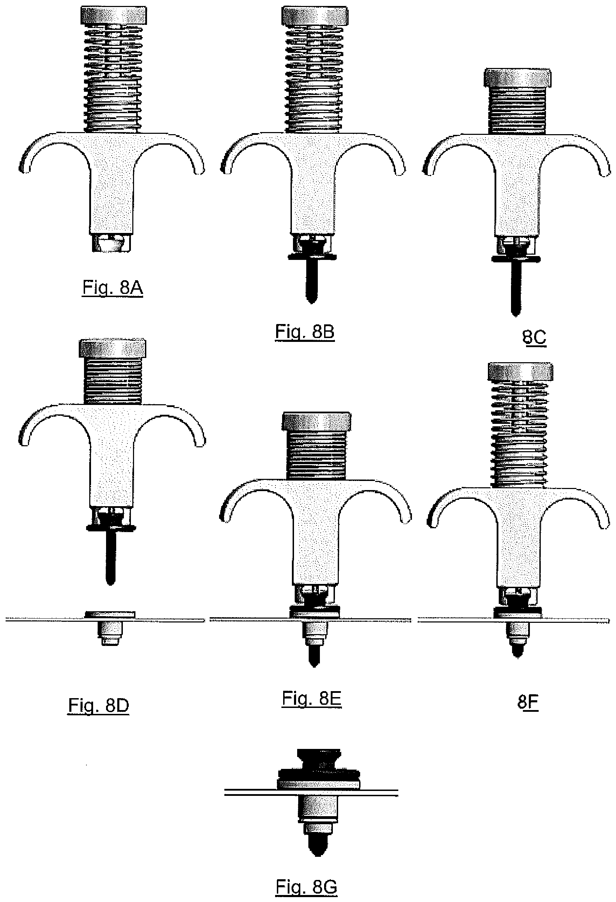

Figures 8A to 8G show the plug of Figures 3 to 5 being inserted into a connection device using the tool of Figures 6 and 7.

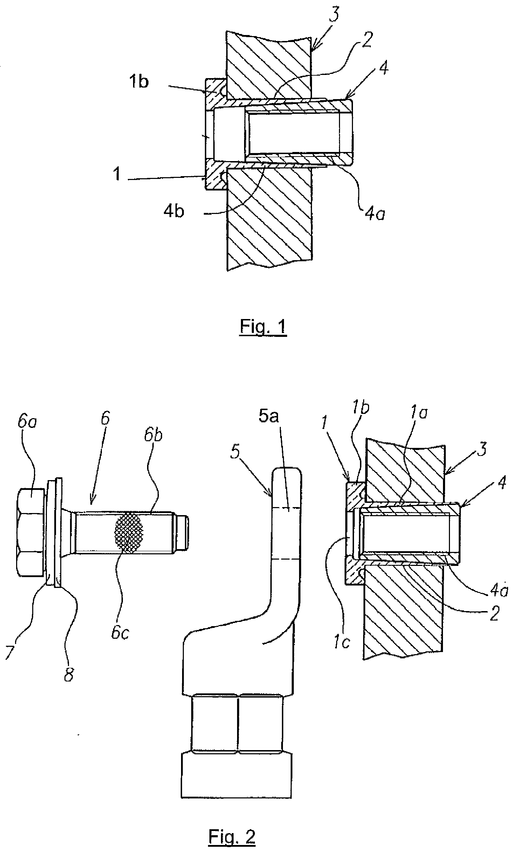

With reference to Figures 1 and 2, there is shown a connecting device 1 adapted for mechanically and electrically connecting an electrical conductor 5 to a substrate 3 having a hole 2 formed therethrough. For instance, the electrical conductor 5 may comprise an earthing terminal, a sensor or the like and the substrate may include an aircraft fuselage, the rail of a railroad or the like.

Connecting devices 1 may take many forms depending on their particular application, though generally they include a main body 4 having a portion 4B arranged to be securely located in the hole 2 of the substrate 3 and defining a threaded hole 4a. The main body 4 of the exemplary fixing device is provided with a flange 9 extending radially from one end of the main body and configured to bear against a face of the substrate 3. The connecting device 1 also comprises a screw 6 having a radially enlarged head 6a and a threaded shank 6b arranged to engage the threaded hole 4a. The electrical conductor 5 includes a generally planar portion provided with a through hole 5a sized to enable the threaded shank 6b of the bolt 6 to pass therethrough. The planar portion may be clamped between the flange 9 of the main body 4 and the head 6a of the screw 6, the main body and screw being formed from an electrically conductive material so as to promote the flow of electrical current between the electrical conductor 5 and the substrate 3.

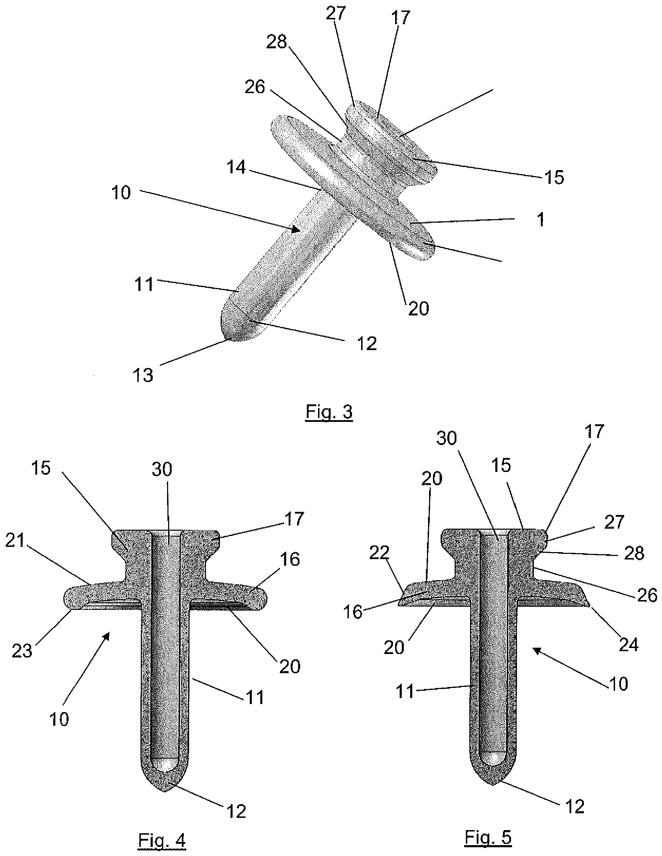

Referring now to Figures 3 and 4, there is provided a plug, generally indicated 10, which comprises a shank 11 having a front end 12 defining a tip 13 and a rear end 14 provided with a head 15. The shank 11 is generally cylindrical and the tip 13 may be domed or conical. The head includes a sealing portion 16 proximal to the tip 13 and a gripping portion 17 distal to the tip 13.

The sealing portion 16 comprises a circular disc extending radially from the shank 11 and having a front face 20, a rear face 21 and a circumferential periphery 22. In one arrangement (Figures 3 and 4), the front face 20 is generally concaved, the rear face 21 is generally convex and the circumferential periphery 22 is rounded. The rounded circumferential periphery 22 defines an annular contact surface 23 which is the most forward part of the sealing portion 16. In an alternative arrangement (Figure 5), the front and rear faces 20, 21 are slightly conical so as to extend forward from the shank 11. The circumferential periphery 22 is angled relative to the shank 11 and defines in combination with the front face 20 an annular contact edge 24 which is the most forward part of the sealing portion. In both arrangements, the front face 20 is profiled so as to form a cavity.

The gripping portion 17 includes a narrow part 26 proximal to the sealing portion 16 and a wide part 27 distal to the sealing portion 16, between those parts there being defined a shoulder 28 which may be stepped, tapered or otherwise formed. The narrow part 26 and the wide part 27 both have circular cross-sections.

The plug 10 includes a bore 30 formed axially therein , the bore extending from an opening 31 in the centre of the rear end 14 towards a point near the centre of the front end 12. The length of the bore 30 extends through a large proportion of the shank 11 and is spaced a small distance from the front end 12. The bore 30 may have a circular cross-section with a generally uniform diameter. Most of the shank 11 is generally tubular and as such has an annular wall, which may have a substantially uniform thickness along its length.

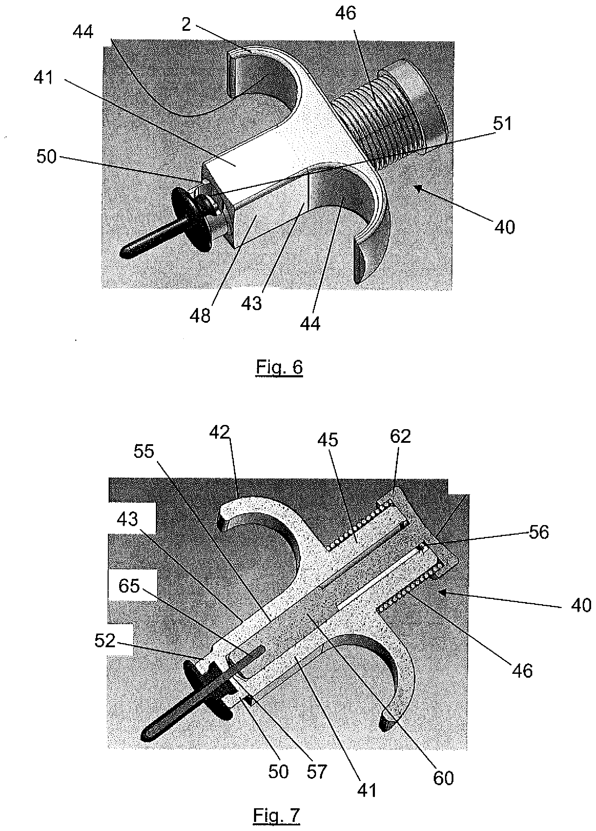

Referring now to Figures 6 and 7, there is shown a tool 40 for manipulating the plug 10. The tool 40 comprises a body portion 41 having two arms 42 extending outwardly from a pair of opposed side walls 43. The arms 42 are arcuate such that their end portions extend forward and define in combination with the side walls 43 of the body portion 41 a pair of curved forward facing finger pads 44 to be gripped by the operator. The body portion 41 includes a rear most portion 45 extending rearward of the arms 42 and which is adapted to support a coil spring 46, to be discussed further below. The body portion 41 also includes a front most part 48 extending forward of the arms 42 and provided with a receiver 50 for holding a single plug 10. The receiver 50 comprises a circumferential wall 52 enclosing a receiving space 51 and having a free edge provided with an inwardly turned lip. A portion of the circumferential wall 52 is removed so as to provide lateral access to the receiving space 51. An elongate chamber 55 is formed in the body portion 41 and extends from an opening 56 in the end face of the rear most part 45 towards an aperture 57 in the front most part 48.

A plunger 60 is disposed in the chamber 55 and arranged for sliding movement therealong. The rear end of the plunger 60 has an end plate 61 which extends outwardly beyond the body portion 41 and terminates in a small forward facing rim 62. The plunger 60, the end plate 61 and the rim 62 collectively define a shallow annular recess in which a free end of the coil spring 46 locates. The front end of the plunger 60 is furnished with a needle 65 which extends through the aperture 57 formed in the front most part of the body portion 41.

Use of the tool 40 to insert a plug 10 into a connecting device 4 will now be described with reference to Figures 9A to 9G.

Figure 9A shows the tool 40 arranged to receive a plug 10. It should be noted that at this point the shank 11 of the plug 10 is too wide to be located in the connecting device 4.

Figure 9B shows the plug 10 located in the receiver 50 of the tool 40. In particular, the gripping portion 17 of the plug 10 is accommodated in the receiving space 51 such that the shoulder 28 of the head 15 bears against the lip of the circumferential wall 52. Since the plug 10 and the tool 40 are arranged coaxially, the needle 65 of the tool is aligned with the opening 31 of the bore 30.

Referring now to Figure 9C, the plunger 60 is then pressed into the chamber 55 so as to cause the needle 65 to extend into the bore 30 of the plug 10. The operator may achieve this by positioning the end plate 61 in the palm of his hand, placing two fingers on the two finger pads 44 and gently closing his hand so as to urge the plunger 60, against the bias of the coil spring 46, further into the chamber 55. As the plunger 60 sinks further into the chamber 55, the needle 65 engages the bottom of the bore 30 and continued extension of the needle 65 begins to elongate the shank 11. As the shank 11 elongates, its width begins to reduce to the extent that it then becomes smaller than the width of the connecting device 4 hole.

Figure 9D shows the tool 40 and plug 10 presented to the connecting device 1.

Figure 9E shows the plug 10 inserted into the connecting device 1, such that the shank 11 extends fully through the hole and the contact surface of the sealing portion 16 engages the flange 1b of the connecting device 1. The plug 10 can be urged firmly against the connecting device 1 such that the rounded peripheral face 22 may flatten to increase the width of the contact surface 23 and thus create an improve seal. This will further restrict the flow of paint into the critical area and help maintain the integrity of the connecting device 1.

In Figure 9F, the pressure on the end plate 61 has been removed and the plunger 60 extends upwardly from the chamber 55 under the bias of the coil spring 46. Withdrawal of the needle 65 allows the elasticity of the plug 10 material to attempt to return the shank 11 to its normal shape. In so doing, the diameter of the front most portion of the shank 11 which extends beyond the connecting device 1 becomes greater than the diameter of the bore of the connecting device 1. This prevents removal of the plug 10 from the connecting device 1 while also sealing the hole and the flange 1b of the connecting device 1. The remainder of the shank 11 located in the hole of the connecting device 1 will also widen, but to a lesser extent since it is limited by the width of the hole. Nevertheless, as the remainder of the shank widens it bears firmly against the surface of the hole so as to prevent paint flowing therealong.

Finally, as shown in Figure 9G, the tool 40 may be removed from the plug 10. This may be achieved by moving the tool 40 laterally to enable the receiver 50 to move clear of the gripping portion.

In the event that the connecting device 1 is to be fitted after the substrate 3 has been painted, it will instead be necessary to protect the substrate 3 rather than the connecting device 1. The plug 10 may be used to protect the substrate 3 in the same way as has been described above for protecting the connecting device 1, the only difference being that a suitably sized plug must be selected for the larger hole 2 in the substrate.

## Claims

1. A plug (10) for temporary location in a hole formed in an electrically conductive body so as to conceal the hole and surrounding surfaces when applying a coating to said body, the plug comprising:
a shank (11) having front and rear ends (12,14) and made from an elastically deformable material;
a head (15) provided on the rear end of the shank (11) and defining an opening (31);
a bore (30) extending axially from the opening in the head (15) towards the front end (12) of the shank (11), **characterised in that** the head (15) comprises a sealing portion (16) proximal to the shank (11) and a gripping portion (17) distal to the shank.

2. A plug as claimed in claim 1, wherein the sealing portion (16) comprises a flange extending radially from the shank and defining a forward facing contact area (23) at least partway around the shank (11).

3. A plug as claimed in claim 2, wherein the forward facing contact area (23) occupies an area of the flange distal to the shank (11).

4. A plug as claimed in claim 2 or claim 3, wherein the flange has front and rear faces (20, 21), the front face being concaved, preferably domed or conical

5. A plug as claimed in any preceding claim, wherein the flange has a peripheral face (22) extending at least partway therearound and interfacing the front and rear faces.

6. A plug as claimed in claim 5, wherein the contact area comprises an annular edge (24) defined between the front face and the peripheral face.

7. A plug as claimed in claim 5, wherein the peripheral face (22) is rounded and defines the forward facing contact area (20).

8. A plug as claimed in any preceding claim, wherein the gripping portion (17) comprises an abutment (28) surface, which is at least partially forward facing and engageable by a tool for urging the plug (10) rearwardly.

9. A plug as claimed in claim 8, wherein the gripping portion (17) comprises a narrow first part (26) adjacent the sealing portion and a wider second part (27) distal from the sealing portion, the abutment surface (28) being defined between the first and second parts.

10. A plug as claimed in claim 8 or claim 9, wherein the abutment surface (28) may comprise a step or a taper.

11. A method of inserting the plug (10) defined in claim 1 into a hole of a substrate or a connecting device, the method comprising the steps of:
selecting a plug (10) having a shank (11) with a diameter larger than that of the hole;
inserting a needle in to the bore (30) of the plug (10);
elongating the shank (11) by driving the needle forwards and urging the gripping portion (17) rearwards;
locating the elongated shank (11) of the plug (10) in the hole and arranging the sealing portion (16) against the substrate or the connecting device; and
withdrawing the needle from the hole so as to enable the shank (11) to attempt to return to its pre-elongated shape.

## Patentansprüche

1. Stopfen (10) zur vorübergehenden Anordnung in einem Loch, das in einem elektrisch leitfähigen Körper ausgebildet ist, sodass das Loch und umliegende Flächen überdeckt werden, wenn auf den Körper eine Beschichtung aufgebracht wird, wobei der Stopfen Folgendes umfasst:
einen Schaft (11), der vordere und hintere Enden (12, 14) aufweist und aus einem elastisch verformbaren Material hergestellt ist;
einen Kopf (15), der an dem hinteren Ende des Schaftes (11) angeordnet ist und eine Öffnung (31) festlegt;
eine Bohrung (30), die sich axial von der Öffnung im Kopf (15) zum vorderen Ende (12) des Schaftes (11) erstreckt, **dadurch gekennzeichnet, dass** der Kopf (15) einen Dichtungsabschnitt (16) nahe dem Schaft (11) und einen Greifabschnitt (17) entfernt vom Schaft umfasst.

2. Stopfen nach Anspruch 1, wobei der Dichtungsabschnitt (16) einen Flansch umfasst, der sich radial vom Schaft erstreckt und einen nach vorn gerichteten Kontaktbereich (23) mindestens teilweise um den Schaft (11) festlegt.

3. Stopfen nach Anspruch 2, wobei der nach vorn gerichtete Kontaktbereich (23) einen Bereich des Flansches fern vom Schaft (11) einnimmt.

4. Stopfen nach Anspruch 2 oder Anspruch 3, wobei der Flansch Vorder- und Rückflächen (20,21) aufweist, wobei die Vorderfläche konkav, vorzugsweise gewölbt oder konisch, ist.

5. Stopfen nach einem der vorstehenden Ansprüche, wobei der Flansch eine Umfangsfläche (22) aufweist, die sich mindestens teilweise um ihn herum erstreckt und die Vorder- und Rückflächen verbindet.

6. Stopfen nach Anspruch 5, wobei der Kontaktbereich eine ringförmige Kante (24) aufweist, die zwischen der Vorderfläche und der Umfangsfläche festgelegt ist.

7. Stopfen nach Anspruch 5, wobei die Umfangsfläche (22) abgerundet ist und den nach vorn gerichteten Kontaktbereich (20) festlegt.

8. Stopfen nach einem der vorstehenden Ansprüche, wobei der Greifabschnitt (17) eine Anlagefläche (28) umfasst, welche mindestens teilweise nach vorn gerichtet ist und mit einem Werkzeug in Eingriff gebracht werden kann, um den Stopfen (10) nach hinten zu drängen.

9. Stopfen nach Anspruch 8, wobei der Greifabschnitt (17) einen schmalen ersten Teil (26) neben dem Dichtungsabschnitt und einen breiteren zweiten Teil (27) fern vom Dichtungsabschnitt umfasst, wobei die Anlagefläche (28) zwischen dem ersten und zweiten Teil festgelegt ist.

10. Stopfen nach Anspruch 8 oder 9, wobei die Anlagefläche (28) eine Stufe oder eine Abschrägung umfassen kann.

11. Verfahren zum Einsetzen des in Anspruch 1 definierten Stopfens (10) in ein Loch eines Substrates oder einer Verbindungsvorrichtung, wobei das Verfahren folgende Schritte umfasst:
Auswählen eines Stopfens (10), der einen Schaft (11) mit einem Durchmesser aufweist, der größer als der des Loches ist;
Einführen einer Nadel in die Bohrung (30) des Stopfens (10);
Verlängern des Schaftes (11) durch Vortreiben der Nadel nach vorn und Drängen des Greifabschnitts (17) nach hinten;
Positionieren des verlängerten Schaftes (11) des Stopfens (10) in dem Loch und Anlegen des Dichtungsabschnitts (16) an dem Substrat oder der Verbindungsvorrichtung; und
Zurückziehen der Nadel aus dem Loch, sodass dem Schaft (11) ermöglicht wird, zu versuchen, in seine vorverlängerte Form zurückzukehren.

## Revendications

1. Bouchon (10) pour positionnement temporaire dans un trou formé dans un corps électriquement conducteur afin de cacher le trou et des surfaces environnantes lors de l'application d'un revêtement sur ledit corps, le bouchon comprenant :
une tige (11) possédant des extrémités avant et arrière (12, 14) et faite d'un matériau élastiquement déformable ;
une tête (15) prévue sur l'extrémité arrière de la tige (11) et définissant une ouverture (31) ;
un alésage (30) s'étendant axialement à partir de l'ouverture dans la tête (15) vers l'extrémité avant (12) de la tige (11), **caractérisé en ce que** la tête (15) comprend une portion d'étanchéité (16) proximale à la tige (11) et une portion de préhension (17) distale à la tige.

2. Bouchon selon la revendication 1, dans lequel la portion d'étanchéité (16) comprend une bride s'étendant radialement à partir de la tige et définissant une zone de contact tournée vers l'avant (23) au moins à mi-chemin autour de la tige (11).

3. Bouchon selon la revendication 2, dans lequel la zone de contact tournée vers l'avant (23) occupe une zone de la bride distale à la tige (11).

4. Bouchon selon la revendication 2 ou la revendication 3, dans lequel la bride présente des faces avant et arrière (20, 21), la face avant étant concave, de préférence bombée ou conique.

5. Bouchon selon une quelconque revendication précédente, dans lequel la bride présente une face périphérique (22) s'étendant au moins à mi-chemin autour de celle-ci et réalisant une interface avec les faces avant et arrière.

6. Bouchon selon la revendication 5, dans lequel la zone de contact comprend un bord annulaire (24) défini entre la face avant et la face périphérique.

7. Bouchon selon la revendication 5, dans lequel la face périphérique (22) est arrondie et définit la zone de contact tournée vers l'avant (20).

8. Bouchon selon une quelconque revendication précédente, dans lequel la portion de préhension (17) comprend une surface de butée (28), qui est orientée au moins partiellement vers l'avant et avec laquelle peut entrer en prise un outil pour pousser le bouchon (10) vers l'arrière.

9. Bouchon selon la revendication 8, dans lequel la portion de préhension (17) comprend une première partie étroite (26) adjacente à la portion d'étanchéité et une seconde partie plus large (27) distale à la portion d'étanchéité, la surface de butée (28) étant définie entre la première et seconde parties.

10. Bouchon selon la revendication 8 ou la revendication 9, dans lequel la surface de butée (28) peut comprendre un épaulement ou un effilement.

11. Procédé d'insertion du bouchon (10) défini dans la revendication 1 dans un trou d'un substrat ou un dispositif de raccordement, le procédé comprenant les étapes de :
la sélection d'un bouchon (10) possédant une tige (11) avec un diamètre supérieur à celui du trou ;
l'insertion d'une aiguille dans l'alésage (30) du bouchon (10) ;
l'allongement de la tige (11) en entraînant l'aiguille vers l'avant et poussant la portion de préhension (17) vers l'arrière ;
le positionnement de la tige allongée (11) du bouchon (10) dans le trou et l'agencement de la portion d'étanchéité (16) contre le substrat ou le dispositif de raccordement ; et
le retrait de l'aiguille à partir du trou afin de permettre à la tige (11) de tenter de retourner à sa forme pré-allongée.
